# EUROPÄISCHE PATENTSCHRIFT

(11) **EP 1 348 593 B1**
(45) Veröffentlichungstag und Bekanntmachung des Hinweises auf die Patenterteilung: **30.04.2008**
(21) Anmeldenummer: 03006963.7
(22) Anmeldetag: 27.03.2003
(51) Int. Cl.: B60N 2/46, A47C 7/54

(54) **Armlehne mit beweglicher Armauflage, insbesondere für Fahrzeuge**
Armrest with movable arm support particularly for vehicles
Accoudoir à support de bras mobile en particulier pour véhicules

(30) Priorität: 28.03.2002 DE 20205029 U
(43) Veröffentlichungstag der Anmeldung: 01.10.2003
(73) Patentinhaber: KTSN Kunststofftechnik Sachsen GmbH & Co. KG, 01796 Pirna (DE)
(72) Erfinder: Müller, Roland, 10458 Ottendorf-Okrilla (DE); Meissner, Mario, 01097 Dresden (DE); Hanneforth, Tilo, 01326 Dresden (DE)
(74) Vertreter: Tragsdorf, Bodo

(56) Entgegenhaltungen:
- DE-A- 3 807 880
- DE-A- 19 915 469
- DE-C- 19 846 030

## Beschreibung

Die Erfindung betrifft eine Armlehne mit in Längsrichtung beweglicher Armauflage, die insbesondere zwischen den Vordersitzen im Bereich der Mittelkonsole von Personenkraftwagen einsetzbar ist.

Aus der gattungsbildenden DE 199 15 469 A1 ist eine Armlehne für einen Sitz bekannt, die an einer Basiseinrichtung vorgesehen ist, die um eine sitzfeste Schwenkachse verschwenkbar ist. Zur Verstellung der Armlehne in Längsrichtung weist die Basiseinrichtung eine Linearführung auf, die aus einem Paar Führungsstangen, die parallel beanstandet zueinander angeordnet sind, und zwei Buchsen, die die Lagerstelle der Armlehne bilden, bestehen. Die Führungsstangen sind mit Gleitsitztoleranz in der Lagerstelle geführt. Der Nachteil dieser Lösung besteht darin, dass die Armlehne frei hin- und herbewegbar ist und nicht in einer für den Fahrer bevorzugten Stellung arretierbar ist. Der Fahrer bzw. Bediener muss die Armlehne verstellen. Bei Bremsmanövern kann es vorkommen, dass sich die Armlehne von selbst verstellt, wodurch die Aufmerksamkeit des Fahrers im Straßenverkehr beeinträchtigt wird.

In der DE 198 46 030 C1 ist eine Armlehne mit einem längsverstellbaren Armauflageelement beschrieben. Dieses überdeckt einen Schlitten, der verschiebbar an einem Grundkörper der Armlehne gelagert ist. Das Armauflageelement ist zumindest in einem Teilbereich biegbar ausgebildet, so dass beim Verschieben des Schlittens nach vorn oder nach hinten sich das Armauflageelement entsprechend verlängern kann. Je nach eingestellter Schlittenlänge wandert die nicht benötigte Länge des Armauflageelementes unsichtbar unter den Schlitten.

Diese Lösung ist in ihrer Herstellung sehr aufwendig und kostenintensiv. Außerdem muss der Fahrer bzw. Bediener die Verstellung des Schlittens selbst vornehmen.

Aus der DE 201 00 902 U1 ist eine Armlehne, bestehend aus einem Auflageelement und einer Armauflage, bekannt, wobei zur Linearführung der Armauflage ein Paar parallel beabstandeter Führungsstangen und jeweils eine dazugehörige Führung angeordnet sind. Die Führungsstangen sind in Führungen linearbeweglich angeordnet und mit dem Auflageelement fest verbunden. Die Führungsstangen sind mit einer Einstell- und Bremsvorrichtung verbunden, durch die im Entlastungszustand der Armauflage die Führungsstangen in Längsrichtung verschiebbar sind und im Belastungszustand der Armauflage in der jeweiligen Stellung arretiert werden können.

Die Führungen für die Führungsstangen sind an jeweils einem Hebel angeordnet. Die Hebel sind in getrennten Lagerböcken einer gemeinsamen Grundplatte drehbar aufgenommen und mittels Federn unabhängig voneinander gegen einen Anschlag gedrückt.

Aufgrund der vorgesehenen Möglichkeit der Verschiebebewegung und Arretierung der Armauflage in Abhängigkeit vom Be- bzw. Entlastungszustand ist diese Lösung in ihrer Herstellung und Montage relativ aufwendig.

Der Erfindung liegt die Aufgabe zugrunde, eine Armlehne mit beweglicher Armauflage, insbesondere für Fahrzeuge, zu schaffen, die sich durch einen vereinfachten Verstellmechanismus für die Linearbewegung und einen geringen Herstellungsaufwand auszeichnet und bei der die technischen Bauteile im ausgefahrenen oder hochgeklappten Zustand der Armlehne nicht sichtbar sind.

Erfindungsgemäß wird die Aufgabe durch die im Anspruch 1 angegebenen Merkmale gelöst. Geeignete Ausgestaltungsvarianten sind Gegenstand der Ansprüche 2 bis 10. Die Armauflage ist als länglicher Hohlkörper mit einer ebenen Unterseite bzw. Unterteil ausgebildet. Die Armauflage besitzt an einem Ende eine Öffnung zur Aufnahme des Grundträgers und wird während der Montage auf diesen aufgeschoben. Nach erfolgter Montage von Grundträger und Armauflage umschließt die Armauflage den Grundträger nahezu vollständig, bis auf die Haltearme der Armlehnenhalterung. Durch die schalenförmige Ausbildung des Grundträgers werden die funktionsbedingten Bauteile für die Realisierung der Verschiebebewegung vollständig abgedeckt und sind optisch nicht mehr sichtbar. An der Unterseite der Armauflage sind im vorderen und hinteren Bereich nach innen gerichtete Lagerstellen zur Aufnahme der Führungsstangen angeordnet. Der Grundträger ist mit Linearführungen für die Führungsstangen ausgerüstet, die an dem Grundträger angeformt bzw. Bestandteil des Grundträgers sind. Zur Einstellung der von dem Bediener gewünschten Lage der Armauflage sind an dem Grundträger mindestens ein federbelastetes Rastelement und ein federbelastetes Bremselement angeordnet. Diese sind vorzugsweise mit kugelförmigen Elementen ausgerüstet, die ständig gegen die Unterseite der Armauflage drücken, wobei das Rastelement in verschiedenen Verschiebestellungen mit der Armauflage verrastet. Die Armauflage ist hierzu an der Unterseite mit in Längsrichtung verlaufenden Gleitflächen versehen. Die mit dem Rastelement korrespondierende Gleitfläche besitzt mehrere in definierten Abständen angeordnete Einsenkungen, in die die Rastkugel des Ratelementes eingreift und dadurch die Armauflage in der gewünschten Stellung arretiert. Da Rast- und Bremselement ständig gegen die Armauflage drücken, wird ein ungewolltes Verschieben der Armauflage ausgeschlossen. Die Armlehne zeichnet sich durch einen einfachen konstruktiven Aufbau aus und lässt sich kostengünstig herstellen. Ein Vorteil ist auch, dass aufgrund der konstruktiven Auslegung die Armauflage in einem relativ großen Bereich, von bis zu ca. 120 mm, verstellbar ist.

Der Grundträger, der mit den Haltearmen für die Armlehnenhalterung ausgebildet ist, kann vorzugsweise als Hybridbauteil ausgebildet werden, das aus einem Metallträgerteil besteht, das mit Kunststoff umspritzt ist. Diese Bauweise des Grundträgers führt im Vergleich zu der ansonsten üblichen Bauweise als Metallgussteil zu einer wesentlichen Gewichtsreduzierung dieses Bauteils. Außerdem ermöglicht die Kunststoffummantelung eine ansprechende Farb- und Formgebung für dieses beim Ausfahren der Armauflage von oben sichtbare Bauteil.

Außerdem ergeben sich verschiedene Möglichkeiten für eine kostengünstige Ausbildung des Grundträgers. So z. B. kann das Metallträgerteil aus einem dünnwandigen Blech gefertigt werden, das zumindest teilweise gelocht ist. Die erforderlichen Linearführungen für die Führungsstangen und die Armlehnenhalterung können an dem Blechbauteil mit angeformt werden. Dieses kann durch Stanzen und Ziehen hergestellt werden. Aufgrund der Belastung der Armlehne sollten die Arme für die Armlehnenhalterung aus Metall bestehen. Dagegen können die Linearführungen für die Führungsstangen aus Kunststoff bestehen und mit angespritzt werden. Eine andere Möglichkeit besteht auch darin, die Arme für die Halterung aus Metall zu fertigen und die Grundplatte mit den Linearführungen aus Kunststoff herzustellen und diese an der Armlehnenhalterung anzuspritzen.

Die hülsenförmigen Bauteile von Rast- und Bremselement können entweder als Einlegeteil an der Grundplatte mit angeformt werden oder in ein angespritztes Gewindeteil eingeschraubt werden.

Die hohlkörperförmige Armauflage wird vorzugsweise aus Kunststoff hergestellt und kann als einteiliges oder zweiteiliges Bauteil ausgeführt sein. Die beiden in Längsrichtung geteilten Hälften können dann in an sich bekannter Weise zusammengefügt werden. Die erforderlichen Lagerstellen für die Führungsstangen sind an der Innenseite der Armauflage angeformt.

Die Erfindung soll nachstehend an einem Ausführungsbeispiel erläutert werden. In der zugehörigen Zeichnung zeigen
- Fig. 1: die Armlehne in teilweise geschnittener perspektivischer Darstellung,
- Fig. 2: die Armlehne gemäß Fig. 1 als Längsschnitt in Einbaulage,
- Fig. 3: den Grundträger der Armlehne als Längsschnitt und
- Fig. 4: einen Schnitt gemäß der Linie A-A in Fig. 3.

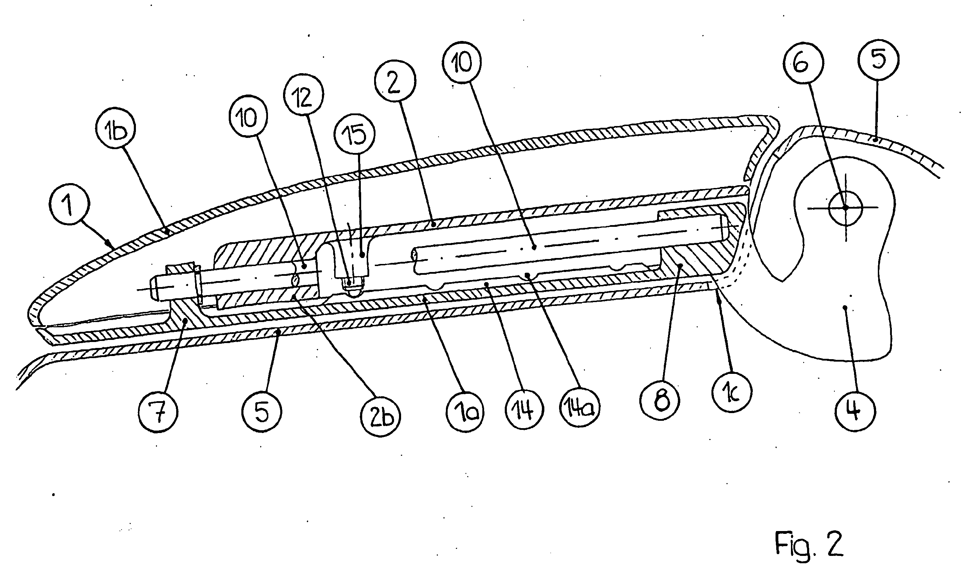

Die Armlehne besteht aus einer Armauflage 1 und einem Grundträger 2, der mit der Armlehnenhalterung, bestehend aus den beiden Haltearmen 3, 4, verbunden ist. Die Armlehne kann z.B. zwischen den Vordersitzen eines Personenkraftwagens, im Bereich der Mittelkonsole 5, schwenkbar installiert werden, wie in Fig. 2 gezeigt. Die Haltearme 3, 4 sind dabei auf einer Welle 6 schwenkbar gelagert. Die Ausbildung der Armlehnenhalterung richtet sich nach den vorhandenen Möglichkeiten am Einbauort der Armlehne. Wie insbesondere aus Fig. 2 hervorgeht, ist die Armauflage 1 als länglicher Hohlkörper ausgebildet, der eine ebene Unterseite bzw. Unterteil 1a und ein leicht gewölbtes Oberteil 1b besitzt sowie eine in Richtung der Armlehnenhalterung 3, 4 zeigende Öffnung 1c. Der Hohlkörper kann entweder einteilig oder zweiteilig, in Längsrichtung geteilt, ausgeführt sein. Unterteil 1a und Oberteil 1b können dann z. B. durch eine Klips- oder Schnappverbindung oder auf sonstige geeignete Art und Weise miteinander verbunden werden. Die Armauflage 1 besteht aus einem Kunststoffbauteil, das nachträglich auf seiner Oberseite mit einem Bezug versehen wird.

An der Unterseite 1a der Armauflage 1 befinden sich im vorderen und hinteren Bereich jeweils zwei nach innen zeigende Lagerstellen 7 und 8 zur Aufnahme der Führungsstangen 9, 10. Die Lagerstellen 7 und 8 sind an der Armauflage 1 angeformt und bilden mit dieser ein Bauteil. Die beiden symmetrisch angeordneten, parallel beabstandeten Führungsstangen 9, 10 sind in den in Auszugsrichtung zeigenden Lagerstellen 7 an der Armauflage 1 befestigt und in an dem Grundträger 2 befindlichen Linearführungen 2a und 2b geführt. Dadurch kann die Armauflage in dem vorgesehenen Einstellbereich, vorzugsweise 80 bis 90 mm, in Längsrichtung verschoben werden. An der Innenseite des Grundträgers 2, der eine schalenförmige Kontur besitzt, sind ein Rastelement 12 und ein Bremselement 11 befestigt, die aus einem hülsenförmigen Bauteil 15 mit einer integrierten Druckfeder und einer Stahl- oder Kunststoffkugel bestehen. Rastelement 12 und Bremselement 11 sind mit Druckfedern unterschiedlicher Spannung ausgerüstet und in Querrichtung parallel beabstandet angeordnet. An der Innenseite des Unterteils 1a der Armauflage 1 befinden sich eine mit dem Rastelement 12 korrespondierende Gleitfläche 14 und eine mit dem Bremselement 11 korrespondierende Gleitfläche 13. Beide Gleitflächen 13, 14 verlaufen in Längsrichtung. In die Gleitfläche 14 sind vier in definierten Abständen angeordnete Einsenkungen 14a eingebracht, die eine Verrastung mit der Rastkugel des Rastelementes 12 in den jeweiligen Verschiebestellungen der Armauflage 1 ermöglichen.

Die Kugeln des Rast-12 und des Bremselementes 11 drücken ständig gegen die Gleitflächen 14 und 13 der Armauflage 1 und verhindern eine ungewollte Bewegung der Armauflage. Der Bediener kann durch eine manuelle Verschiebebewegung der Armauflage 1, durch Überwindung der Vorspannung der Druckfedern in den Rast- und Bremselementen 12, 11, diese in die gewünschte verrastende Stellung verschieben.

Während der Verschiebebewegung werden die in den Linearführungen 2a, 2b geführten Führungsstangen 9, 10 mit bewegt.

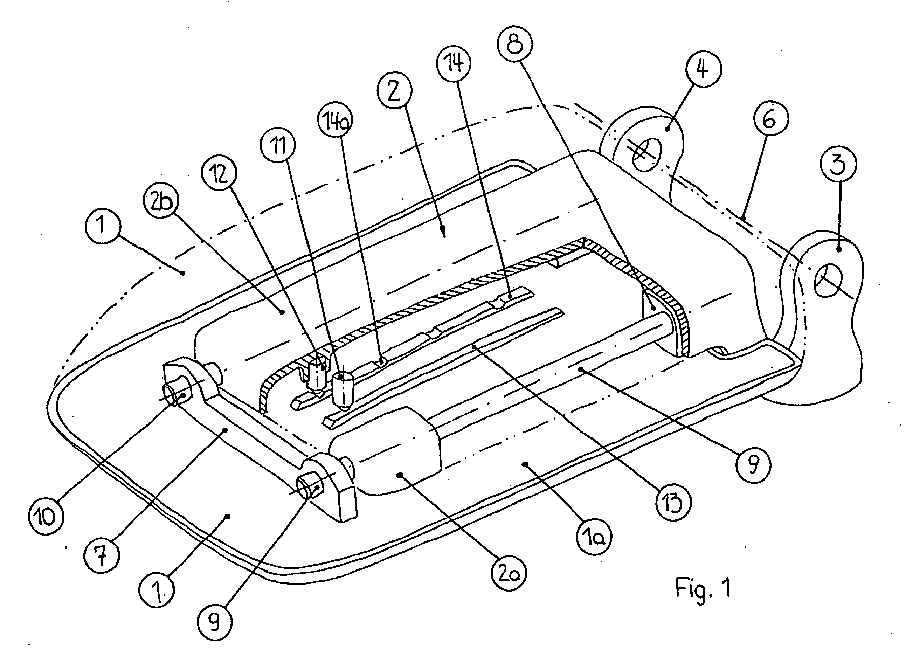

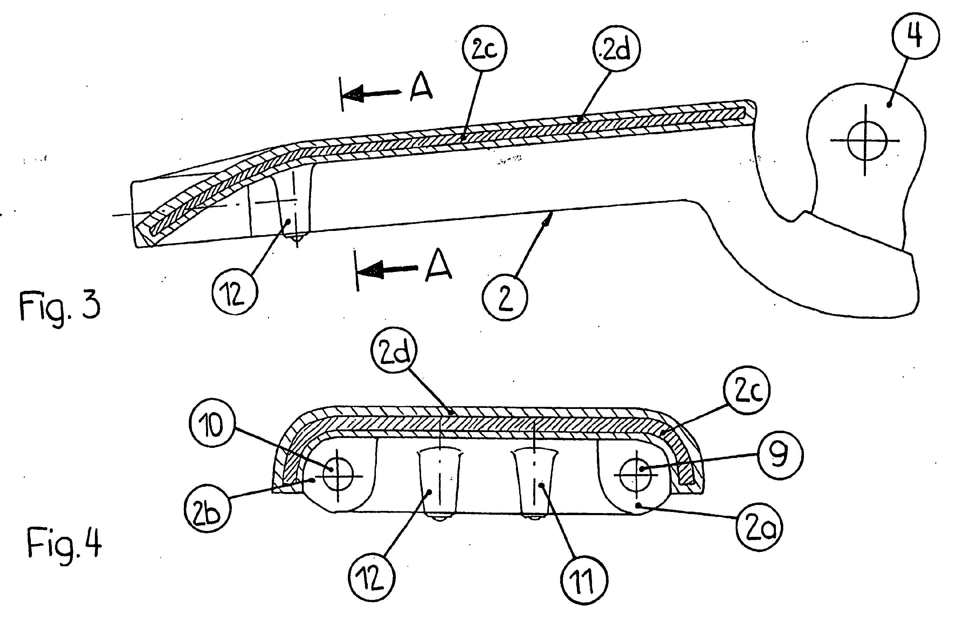

Der schalenförmige Grundträger 2 ist vorzugsweise als Hybridbauteil ausgebildet und besteht aus einem Metallträgerteil 2c, das allseitig mit Kunststoff umspritzt ist, wie in den Figuren 3 und 4 gezeigt. Bei der gezeigten Ausführungsvariante ist nur der eigentliche Grundträger 2 mit einer Kunststoffschicht 2d ummantelt. Die ebenfalls aus Metall bestehenden Haltearme 3, 4 und die Linearführungen 2a und 2b sind nicht umspritzt. Die Linearführungen 2a, 2b sind aus dem Metallteil, vorzugsweise einem Blech, herausgedrückt und mit Führungshülsen versehen. Selbstverständlich können die Linearführungen 2a, 2b auch aus Kunststoff ausgebildet sein. Das Hybridbauteil kann im Spritzgießverfahren mit Kunststoff umspritzt werden unter gleichzeitiger Ausbildung der Linearführungen 2a, 2b. Die Rastelemente 11, 12 können entweder als sogenanntes Einlegeteil ebenfalls mit umspritzt oder auch eingeschraubt werden, wie in Fig. 1 gezeigt. Die Ausbildung des Grundträgers als Hybridbauteil bietet den Vorteil, dass eine erhebliche Gewichtseinsparung erzielt werden kann, ohne nachteilige Auswirkungen auf die erforderliche Stabilität und Festigkeit. Das vorzugsweise aus Blech bestehende Metallträgerteil kann erforderlichenfalls zusätzlich noch gelocht werden, um die Verbindung Metall/Kunststoff zu verbessern. Die Kombination Metallbauteil/Kunststoff für die Herstellung des Grundträgers ermöglicht eine ansprechende Gestaltung in der Farbe und im Design. Durch die schalenförmige Ausbildung des Grundträgers werden die funktionsbedingten Bauteile für die Realisierung der Verschiebebewegung vollständig abgedeckt und sind während der Verschiebewegung der Armauflage nicht sichtbar.

## Patentansprüche

1. Armlehne mit beweglicher Armauflage, insbesondere für Fahrzeuge, bestehend aus einem Paar parallel beabstandeter Führungsstangen (9, 10), die in Linearführungen beweglich geführt sind, wobei die Führungsstangen mit der Armauflage verbunden sind, sowie einem Grundträger (2) mit einer Armlehnenhalterung (3, 4) und einer Einstellvorrichtung für die Linearbewegung der Armauflage, , wobei die Armauflage (1) als länglicher Hohlkörper mit einer ebenen Unterseite (1a) ausgebildet ist, der an einem Ende eine Öffnung (1c) zur Aufnahme des Grundträgers (2) aufweist und im eingebauten Zustand des Grundträgers (2) diesen bis auf die Armlehnenhalterung (3, 4) nahezu vollständig umschließt, **dadurch gekennzeichnet, dass** an der Unterseite (1a) der Armauflage (1) nach innen gerichtete Lagerstellen (7, 8) zur Aufnahme der Führungsstangen (9, 10) angeordnet sind, der Grundträger (2) mit den Linearführungen (2a, 2b) für die Führungsstangen (9,10) ausgerüstet ist und an dem Grundträger (2) mindestens ein federbelastetes Rastelement (12) und ein federbelastetes Bremselement (11) angeordnet sind, die ständig gegen die Unterseite (1a) der Armauflage (1) drücken, wobei das Rastelement (12) in verschiedenen Verschiebestellungen der Armauflage (1) mit dieser verrastet.

2. Armlehne nach Anspruch 1, **dadurch gekennzeichnet, dass** der Grundträger (2) mit der Armlehnenhalterung (3, 4) als Hybridbauteil ausgebildet ist, das aus einem Metallträgerteil (2c) besteht, das mit Kunststoff (2d) umspritzt ist.

3. Armlehne nach einem der Ansprüche 1 oder 2, **dadurch gekennzeichnet, dass** das Metallträgertell (2c) aus einem dünnwandigen Blech besteht, das zumindest teilweise gelocht ist, wobei die Linearführungen (2a, 2b) für die Führungsstangen (9, 10) und die Armlehnenhalterung (3, 4) angeformt sind.

4. Armlehne nach einem der Ansprüche 1 oder 2, **dadurch gekennzeichnet, dass** das Metallträgerteil (2c) aus einem dünnwandigen Blech besteht, das zumindest teilweise gelocht ist, wobei die Armlehnenhalterung (3, 4) aus Blech besteht und angeformt ist, und die Linearführungen (2a, 2b) für die Führungsstangen (9, 10) aus Kunststoff bestehen und angespritzt sind.

5. Armlehne nach einem der Ansprüche 1-4, **dadurch gekennzeichnet, dass** die Armlehnenhalterung (3, 4) aus Metall besteht und die Grundträger (2) mit den Linearführungen (2a, 2b) für die Führungsstangen (9,10) aus Kunststoff bestehen, die an der Armlehnenhalterung (3, 4) angespritzt sind.

6. Armlehne nach einem der Ansprüche 1 bis 5, **dadurch gekennzeichnet, dass** das Rastelement (12) und das Bremselement (11) eine unterschiedliche Federbelastung besitzen und aus einer Druckfeder und einer Kugel bestehen, die jeweils in einem hülsenförmigen Bauteil (15) gehalten sind.

7. Armlehne nach Anspruch 6, **dadurch gekennzeichnet, dass** das hülsenförmige Bauteil (15) an dem Grundträger (2) durch Spritzgießen zusammen mit der Kunststoffummantelung angeformt ist.

8. Armlehne nach einem der Ansprüche 1 bis 7, **dadurch gekennzeichnet, dass** an der Innenseite der Armauflage (1) In Längsrichtung verlaufende Gleitflächen (13,14) vorgesehen sind, die mit dem jeweiligen Rast- (12) und Bremselement (11) korrespondieren, wobei in der mit dem Rastelement (12) korrespondierenden Gleitfläche (14) In definierten Abständen mehrere Einsenkungen (14a) eingebracht sind.

9. Armlehne nach einem der Ansprüche 1 bis 8, **dadurch gekennzeichnet, dass** die als Hohlkörper ausgebildete Armauflage (1) in Längsrichtung zweigeteilt ist, wobei die beiden Teile (1a, 1b) miteinander verbunden sind.

10. Armlehne nach einem der Ansprüche 1 bis 9, **dadurch gekennzeichnet, dass** der Verstellweg der in Längsrichtung beweglichen Führungsstangen (9,10) in einem Bereich von ca. 80 bis 120 mm liegt.

## Claims

1. Armrest with movable arm support particularly for motor vehicles, consisting of a pair of parallel guide rods (9, 10) which are guided by guiding devices to allow their to-and-fro movement and connected to the arm support, and a base carrier (2) with armrest holder (3, 4) and an adjusting device for the to-and-fro movements of the arm support, with the arm support (1) having a flat underside (1a) and at one of its far ends an opening (1c) in which the base carrier (2) can rest and, in inbuilt condition, is taken up almost completely except for the armrest holder (3, 4), **characterised in that** the arm support's (1) flat underside (1a) has inward facing bearings (7, 8) to take up the guide rods (9,10), the base carrier (2) is equipped with linear guiding devices (2a, 2b) for the guide rods (9,10), and there is at least one spring-loaded locking element (12) and one spring-loaded braking element (11) which constantly press against the arm support's (1) underside (1a), and the locking element (12) engages with the arm support (1) when shifting into different rest positions.

2. Armrest according to claim 1, **characterised in that** the base carrier (2) and the armrest holder (3, 4) are designed to form a hybrid component that consists of a metal support (2c) with a plastic spray-coat (2d).

3. Armrest according to one of the claims 1 or 2, **characterised in that** the metal support (2c) consists of a thin sheet metal element which is perforated at least in parts and to which the linear guiding devices (2a, 2b) for the guide rods (9, 10) and the armrest holder (3, 4) form integral parts.

4. Armrest according to one of the claims 1 or 2, **characterised in that** the metal support (2c) consists of a thin sheet metal element which is perforated at least in parts and to which the armrest holder (3, 4) made of sheet metal forms integral part, and the linear guiding devices (2a, 2b) for the guide rods (9, 10) are made of plastic and moulded-in.

5. Armrest according to one of the claims 1 to 4, **characterised in that** the armrest holder (3, 4) is made of metal, and the base carrier (2) with the linear guiding devices (2a, 2b) for the guide rods (9,10) are all together made of moulded-in plastic to fit the armrest holder (3, 4).

6. Armrest according to one of the claims 1 to 5, **characterised in that** the locking element (12) and the braking element (11) have different spring loads and both consist of a pressure spring and a ball which are retained in a sleeve-like component (15).

7. Armrest according to claim 6, **characterised in that** the sleeve-like component (15) at the base carrier (2) is injection-moulded to form integral part with the plastic coat.

8. Armrest according to one of the claims 1 to 7, **characterised in that** at the insides of the arm support (1) there are provided longitudinal sliding surfaces (13, 14) to correspond with the respective locking element (12) and braking element (11), and there are several, regularly spaced hollows (14a) provided in the sliding surface (14) corresponding to the locking element (12).

9. Armrest according to one of the claims 1 to 8, **characterised in that** the arm support (1), which is designed as hollow body, is longitudinally split in two parts (1a, 1b) that are connected with each other.

10. Armrest according to one of the claims 1 to 9, **characterised in that** the adjusting range of the guide rods' (9, 10) to-and-fro movement is approximately 80mm to 120mm.

## Revendications

1. Accoudoir à support de bras mobile, en particulier pour véhicules, se composant d'une paire de tiges de guidage (9, 10), écartées parallèlement l'une de l'autre, qui sont guidées de façon à pouvoir se déplacer dans des guidages linéaires, les tiges de guidage étant reliées au support de bras, ainsi que d'un support de base (2) muni d'une fixation d'accoudoir (3, 4) et d'un dispositif de réglage du déplacement linéaire du support de bras, le support de bras (1) étant réalisé sous forme de corps creux allongé à face inférieure plane (1a) qui présente à une extrémité un orifice (1c) destiné à loger le support de base (2) et qui, une fois le support de base (2) installé, entoure celui-ci presque entièrement à part la fixation d'accoudoir (3, 4), **caractérisé en ce que** des points d'appui (7, 8) dirigés vers l'intérieur et destinés à loger les tiges de guidage (9, 10) sont disposées sur la face inférieure (1a) du support de bras (1), le support de base (2) est équipé des guidages linéaires (2a, 2b) destinés aux tiges de guidage (9, 10) et au moins un élément d'enclenchement (12) monté sur ressort et un élément de freinage (11) monté sur ressort exerçant constamment une pression sur la face inférieure (1a) du support de bras (1) sont disposés sur le support de base (2), l'élément d'enclenchement (12) venant mordre avec le support de bras (1) dans différentes positions de glissement de celui-ci.

2. Accoudoir selon la revendication 1, **caractérisé en ce que** le support de base (2) muni de la fixation d'accoudoir (3, 4) est réalisé sous forme de composant hybride composé d'un élément support en métal (2c) recouvert de matière plastique (2d).

3. Accoudoir selon l'une quelconque des revendications 1 ou 2, **caractérisé en ce que** l'élément de support en métal (2c) se compose d'une tôle à parois minces qui est au moins de la tôle percée, les guidages linéaires (2a, 2b) destinés aux tiges de guidage (9, 10) et la fixation d'accoudoir (3, 4) étant formés dessus.

4. Accoudoir selon l'une quelconque des revendications 1 ou 2, **caractérisé en ce que** l'élément de support en métal (2c) se compose d'une tôle à parois minces qui est au moins de la tôle percée, la fixation d'accoudoir (3, 4) se composant de tôle et étant formée dessus, et les guidages linéaires (2a, 2b) destinés aux tiges de guidage (9, 10) se composent de matière plastique moulée dessus.

5. Accoudoir selon l'une quelconque des revendications 1 à 4, **caractérisé en ce que** la fixation d'accoudoir (3, 4) se compose de métal et les supports de base (2) munis des guidages linéaires (2a, 2b) destinés aux tiges de guidage (9, 10) se composent de matière plastique et sont moulés sur la fixation d'accoudoir (3, 4).

6. Accoudoir selon l'une quelconque des revendications 1 à 5, **caractérisé en ce que** l'élément d'enclenchement (12) et l'élément de freinage (11) possèdent un montage sur ressort différent et se composent d'un ressort de compression et d'une bille maintenus chacun dans un composant tubulaire (15).

7. Accoudoir selon la revendication 6, **caractérisé en ce que** le composant tubulaire (15) est formé sur le support de base (2) par moulage par injection avec l'enveloppe en matière plastique.

8. Accoudoir selon l'une quelconque des revendications 1 à 7, **caractérisé en ce que** des surfaces de glissement (13, 14) s'étendant dans le sens longitudinal et correspondant à l'élément d'enclenchement (12) et l'élément de freinage (11) respectifs sont prévues sur la face intérieure du support de bras (1), plusieurs renfoncements (14a) étant placés à des écarts définis dans la surface de glissement (14) correspondant à l'élément d'enclenchement (12).

9. Accoudoir selon l'une quelconque des revendications 1 à 8, **caractérisé en ce que** le support de bras (1) réalisé sous forme de corps creux est divisé en deux dans le sens longitudinal, les deux parties (1a, 1b) étant reliées l'une à l'autre.

10. Accoudoir selon l'une quelconque des revendications 1 à 9, **caractérisé en ce que** la course des tiges de guidage (9,10) pouvant se déplacer dans le sens longitudinal est comprise entre env. 80 et 120 mm.
